Europäisches Patentamt

European Patent Office

Office européen des brevets

(19)

(11) **EP 1 312 997 B1**

(12) **FASCICULE DE BREVET EUROPEEN**

(45) Date de publication et mention
de la délivrance du brevet:
**08.03.2006 Bulletin 2006/10**

(51) Int Cl.:
*G05D 1/08* (2006.01)  *B64G 1/32* (2006.01)

(21) Numéro de dépôt: **01402970.6**

(22) Date de dépôt: **20.11.2001**

(54) **Procédé de commande d'attitude et de stabilisation d'un satellite en orbite basse, par couplage avec le champ magnétique terrestre**

Steuerungsverfahren zur Lageregelung und Stabilisierung eines Satelliten in niedriger Umlaufbahn, durch Kopplung mit dem Erdmagnetfeld

Low earth orbit satellite attitude and stabilisation control method using coupling with earth's magnetic field

(84) Etats contractants désignés:
**AT BE CH CY DE DK ES FI FR GB GR IE IT LI LU MC NL PT SE TR**

(43) Date de publication de la demande:
**21.05.2003 Bulletin 2003/21**

(73) Titulaire: **EADS ASTRIUM SAS**
**31402 Toulouse Cedex 4 (FR)**

(72) Inventeurs:
• **Defendini, Ange**
**31070 Toulouse Cedex (FR)**
• **Lagadec, Kristen**
**31070 Toulouse Cedex (FR)**

(74) Mandataire: **Loisel, Bertrand et al**
**Cabinet Plasseraud**
**65/67 rue de la Victoire**
**75440 Paris Cedex 09 (FR)**

(56) Documents cités:
**FR-A- 2 630 398      FR-A- 2 742 243**

• **LUIZ DANILO DAMASCENO FERREIRA ET AL: "ATTITUDE AND SPIN RATE CONTROL OF A SPINNING SATELLITE USING GEOMAGNETIC FIELD" JOURNAL OF GUIDANCE AND CONTROL AND DYNAMICS,US,AIAA. NEW YORK, vol. 14, no. 1, 1991, pages 216-218, XP000257745 ISSN: 0731-5090**

**Description**

La présente invention concerne les procédés de contrôle de l'attitude d'un satellite placé sur une orbite suffisamment basse pour que l'intensité du champ magnétique terrestre autorise une mesure d'attitude à l'aide d'un magnétomètre à trois axes et une commande de modification d'attitude par interaction de magnéto-coupleurs portés par le satellite avec le champ magnétique terrestre.

Pratiquement cette condition est remplie lorsque le satellite est, sur au moins une partie de son orbite, à une altitude inférieure à 2000 kilomètres.

On connaît déjà (FR-A-2 742 243) un procédé de commande d'attitude permettant de réduire les vitesses de rotation du satellite, notamment lorsqu'il est largué par son lanceur, et d'orienter un axe lié au satellite normalement au plan de l'orbite. Suivant ce procédé, utilisant une loi dite "en B point" pour indiquer qu'elle fait intervenir la dérivée du champ magnétique terrestre B, on mesure le champ magnétique terrestre suivant les trois axes d'un trièdre de référence lié au satellite, on dérive les mesures par rapport au temps, on multiplie les dérivées par un gain et on fait passer un courant représentatif du résultat dans des magnéto-coupleurs pour créer des moments magnétiques qui tendent à garder le satellite fixe par rapport aux lignes de force du champ magnétique terrestre.

Un tel procédé a déjà été utilisé pour la commande d'attitude d'un satellite comportant des roues ou volants d'inertie créant un moment cinétique interne fournissant une raideur gyroscopique. Mais, pour certaines missions, il est souhaitable d'éviter l'emploi d'actionneurs inertiels (volants ou roues d'inertie). On peut citer à titre d'exemple les satellites destinés à des missions scientifiques de précision élevée embarquant le moins possible de mécanisme ou ceux destinés à des missions d'observation de la terre utilisant des actionneurs gyroscopiques qu'on préfère n'utiliser qu'en mode normal.

Le principe mis en oeuvre est alors le suivant : on applique au satellite, à l'aide des magnéto-coupleurs, un couple qui s'oppose à la variation du champ magnétique mesuré suivant des axes liés au satellite, en utilisant le fait que le champ géomagnétique est uniforme localement, de sorte que la variation des composantes du champ magnétique mesuré selon les axes liés au satellite ait une bonne approximation des vitesses angulaires du satellite. Les magnéto-coupleurs sont commandés de façon que les couples qu'ils appliquent s'opposent aux vitesses angulaires mesurées, en vue de réduire les vitesses de rotation.

Classiquement, les magnéto-coupleurs sont commandés dans ce but de façon à créer un vecteur moment magnétique Mc proportionnel à la dérivée temporelle de la valeur du champ magnétique terrestre Bm mesuré :

$$\text{Mc}=-\text{k}. \quad \dot{Bm} \qquad\qquad (1)$$

Dans cette formule, k désigne un gain.

La stabilisation provoquée par un tel mode de commande, qui dissipe de l'énergie, amène le satellite à tourner finalement à une vitesse 2 $\omega o$ égale à deux fois la pulsation orbitale autour de la normale à l'orbite.

Cette rotation, à raison de deux tours par orbite, même autour de l'axe de plus grande inertie, risque à elle seule de ne pas offrir suffisamment de raideur gyroscopique pour stabiliser le satellite.

De plus, il peut être préférable de faire tourner le satellite autour d'un axe autre que l'axe de plus grande inertie, par exemple autour de l'axe normal au plan des générateurs solaires que porte habituellement un satellite.

La présente invention vise notamment à fournir un procédé de stabilisation d'un satellite en orbite basse ne faisant pas appel, au moins de façon appréciable, à un moment cinétique interne, en permettant en conséquence d'éviter l'emploi de volants et roues d'inertie.

Dans ce but l'invention propose notamment un procédé de commande d'attitude et de stabilisation d'un satellite en orbite terrestre basse avec une pulsation orbitale $\omega o$, suivant lequel on mesure les composantes du vecteur champ magnétique terrestre $\vec{B}_m$ suivant les trois axes de mesure d'un trièdre lié au satellite (pratiquement à l'aide d'un magnétomètre trois axes), on déduit desdites composantes l'orientation du champ magnétique terrestre mesuré dans le trièdre et la dérivée du vecteur dudit champ et on commande des magnéto-coupleurs portés par le satellite à partir desdites orientation et dérivées du champ magnétique terrestre pour créer un couple de mise en rotation du satellite à une pulsation $\omega c$ autour d'un axe de spin déterminé du satellite, et qui se caractérise en ce que le procédé est mis en oeuvre sans faire appel à un moment cinétique interne au satellite, et l'axe de spin est un axe sélectionné du satellite, pouvant être différent de l'axe de plus grande inertie du satellite, et autour duquel le satellite tourne avec ladite pulsation $\omega c$ qui est supérieure à 2 $\omega o$.

Cette rotation ou spin peut être obtenue en ajoutant, au terme $\vec{B}_m$ de la formule (1), un vecteur de consigne $\dot{Bi}$ représentatif d'une vitesse angulaire de biais, tendant à amener l'axe de spin orthogonalement au plan de l'orbite, et donnant la vitesse de spin recherchée. La formule (2) donne alors le moment magnétique Mc à appliquer au satellite par la commande des magnéto-coupleurs, et donc le courant à y faire passer.

$$\text{Mc} = -\text{k} \ (\dot{B}m - \dot{B}i) \tag{2}$$

où k est un gain, et $Bm$ un vecteur représentant le champ magnétique terrestre local. Le biais $\dot{Bi}$ peut être calculé par exemple à partir de la valeur du vecteur vitesse angulaire $\Omega i$ recherché :

$$\dot{B}i = \Omega i \ \text{X} \ \dot{B}m$$

Alors la vitesse angulaire de biais représentée par ledit vecteur $\dot{Bi}$ peut être générée par application, à l'aide des magnéto-coupleurs, d'un moment

$$\text{M}_c = \text{KB}.(\dot{b}_m - \dot{b}_i) = \text{KB}.(\dot{b}_m - \Omega i \ \text{X} \dot{b}_m) \tag{3}$$

Où $\dot{b}_i$ est la variation de la direction magnétique de consigne en repère satellite, b est un vecteur B normé et $\Omega i$ est le vecteur vitesse angulaire souhaité de la direction magnétique $b_i$ en repère satellite.

En variante, la vitesse angulaire de biais représentée par le vecteur $\dot{Bi}$ peut être générée par l'application, à l'aide des magnéto-coupleurs, d'un moment qui est dans un plan normal au champ magnétique terrestre $Bm$.

Par exemple, $\Omega i = [0 \ 0 \ \omega i]$ si l'on veut que le champ magnétique tourne à vitesse $\omega i$ autour de l'axe de tangage Zs (axe orthogonal au plan des générateurs solaires).

La mise en oeuvre de la loi (2) se traduit par une dissipation d'énergie qui assure la convergence. Elle tend à annuler les composantes de la vitesse angulaire du satellite tranverses à l'axe de spin et donc à amortir la nutation, et notamment celle qui peut exister lors de l'injection sur orbite.

On choisira la loi de spin (2) (vitesse de spin et direction de l'axe de spin en repère satellite) en fonction de divers paramètres, tels que l'inclinaison de l'orbite sur l'équateur et/ou la phase en cours parmi les phases successives d'une mission.

La mission peut requérir que l'axe de spin soit orienté autrement que selon la normale au plan de l'orbite alors que la loi (2) amène l'axe de spin choisi dans cette direction. Selon la revendication 7, après ou pendant ladite mise en rotation du satellite à vitesse $\omega c$, on peut générer, par action des magnéto-coupleurs, un couple perpendiculaire à l'axe de spin Zs pour écarter l'axe de spin Zs de la normale au plan de l'orbite.

Selon la revendication 6, on peut introduire, dans la loi de détermination du moment magnétique Mc, un terme générant une composante de couple tendant à amener l'axe de spin Zs dans une direction prédéterminée par rapport à la direction du soleil.

Par exemple il peut être souhaitable d'orienter l'axe de spin vers le soleil pour que la puissance reçue par les générateurs solaires soit maximale. Pour cela l'axe de spin est « redressé » pour l'amener dans la direction du soleil ce qui implique d'une part de mesurer l'orientation du satellite par rapport au soleil, d'autre part de modifier la loi (2) d'arrivée à un régime normal ou nominal.

Selon la revendication 8, on peut contrôler l'orientation de l'axe de spin Zs de façon à maintenir l'axe de spin orthogonal à des générateurs solaires du satellite et dirigé vers le soleil.

L'orientation du soleil peut être déterminée à l'aide d'un capteur solaire dont la direction de visée coïncide avec l'axe de spin recherché (normale aux générateurs solaires par exemple) et qui fournit un signal d'écart suivant deux directions.

Il n'est pas nécessaire que le capteur solaire ait une caractéristique linéaire car seule importe la direction du soleil. Selon la revendication 2, on peut réaliser un mode d'acquisition ou de mise en pointage solaire n'utilisant que la mesure du champ magnétique terrestre $\dot{Bm}$, des magnéto-coupleurs et au moins un capteur solaire.

Lors des éclipses, le capteur solaire ne fournit plus de mesure. La direction de l'axe de spin reste cependant contrôlée comme en phase jour suivant la loi (2). La continuité de cette loi assure un réalignement progressif de l'axe de spin avec la normale.

Dès convergence obtenue par la loi (2) le soleil sera dans le champ de visée du capteur, qui habituellement est presque hémisphérique, sauf si l'écart entre la direction du soleil et le plan de l'orbite est très faible. Dans ce dernier cas un capteur supplémentaire, d'axe de visée différent du premier et pouvant avoir un champ de visée faible, est prévu.

En résumé la mise en oeuvre de la loi de commande (2) permet d'arriver à un état initial déterminé de rotation autour d'un axe de spin orthogonal au plan de l'orbite et d'amortir la nutation éventuelle quelle que soit son origine. Le redressement de l'axe de spin peut provoquer une nouvelle nutation ; elle sera amortie par le même processus que lors de la stabilisation initiale par la loi (2).

On voit que le procédé suivant l'invention ne nécessite ni propulseur, ni gyroscope et que les seuls capteurs requis sont un magnétomètre trois axes et éventuellement un capteur solaire à grand champ de vue, de façon à voir le soleil dès la sortie d'éclipse et en fin de stabilisation amenant l'axe de spin normalement au plan de l'orbite. Seuls les magnéto-coupleurs sont utilisés pour commander l'attitude. Les lois de contrôle sont très simples. Selon la revendication 9, lesdites composantes du vecteur champ magnétique terrestre *Bm* sont mesurées en utilisant au moins un magnétomètre trois axes.

Les caractéristiques ci-dessus, ainsi que d'autres, apparaîtront mieux à la lecture de la description qui suit d'un mode particulier de réalisation, donné à titre d'exemple non limitatif.

La description se réfère aux dessins qui l'accompagnent, dans lesquels :

- la figure 1 est un schéma montrant la configuration des lignes de force du champ magnétique terrestre traversées par un satellite circulant sur une orbite polaire ;
- la figure 2 montre une constitution possible de satellite auquel est applicable l'invention ;
- la figure 3 montre les orientations successives d'un satellite placé sur une orbite polaire ou sur une orbite très inclinée sur l'équateur, depuis l'injection jusqu'à réduction des vitesses par application de la loi "B spin" ;
- la figure 4 montre les conditions d'acquisition de la direction du soleil ;
- la figure 5 montre les orientations données par la loi "B spin" à un satellite placé sur une orbite polaire héliosynchrone, dont le noeud ascendant est proche de 6h ou 18h en heure locale ;
- la figure 6 est un schéma synoptique qui montre la constitution de principe d'un dispositif permettant de mettre en oeuvre la loi "B spin" modifiée pour redresser l'axe de spin.

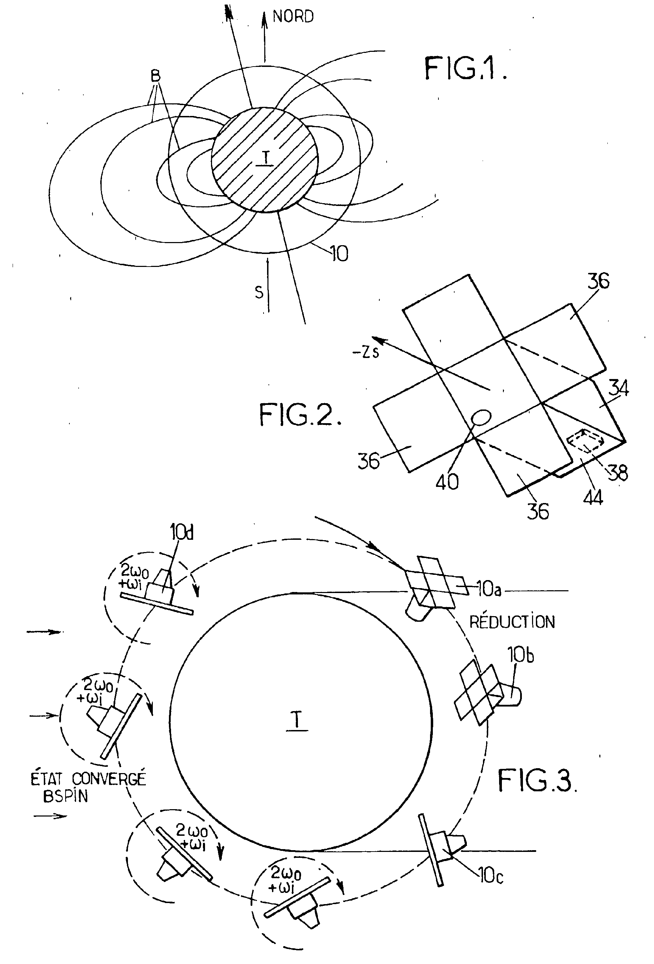

Il faut d'abord rappeler que les lignes de force du champ magnétique de la terre T ont, dans un plan passant par les pôles, l'allure générale montrée par les lignes B en figure 1. L'utilisation de la loi en B point permet de dissiper l'énergie de rotation que présente le satellite après séparation du lanceur, ou en cas d'incident, jusqu'à ce que le satellite soit fixe par rapport aux lignes de force du champ magnétique terrestre, ce qui provoque une rotation du satellite, à deux fois la pulsation orbitale $\omega_o$, autour de la normale au plan de l'orbite.

Pour éviter les interactions entre les magnéto-coupleurs et le magnétomètre, les mesures et les mises en oeuvre de magnéto-coupleurs peuvent être effectuées par exemple de façon alternée.

On prendra maintenant comme exemple le cas d'un satellite dont la configuration générale est celle donnée en figure 2. Ce satellite comporte une caisse 34 sur laquelle sont montés des générateurs solaires 36 dans une orientation fixe. On désignera par Ys un axe dans le plan des générateurs solaires et par Zs l'axe normal au plan des générateurs solaires. La caisse porte un magnétomètre trois axes 38 et des magnéto-coupleurs non représentés permettant de créer des moments de rotation du satellite par interaction avec le champ magnétique terrestre. Elle porte également un capteur solaire 40. On supposera que le satellite est destiné à être placé en orbite polaire basse héliosynchrone et dont l'heure locale du noeud ascendant est proche de midi-minuit, avec orientation de l'axe de spin vers le soleil pour obtenir un éclairement maximum des générateurs solaires.

On décrira maintenant les étapes successives d'une séquence d'amenée du satellite dans sa configuration permanente sur orbite.

1. Une première étape permet de réduire les vitesses de rotation indésirables, de mettre le satellite en spin, d'amener l'axe de spin vers la normale au plan de l'orbite et d'amortir la nutation.

Pour cela, la loi (2) est mise en oeuvre dès séparation d'avec le lanceur (ou en sortie d'un mode survie).

- Comme on l'a vu plus haut, elle réduit, par dissipation d'énergie, les vitesses angulaires dues par exemple à un transfert de moment cinétique lors de la séparation.
- Le biais $\dot{B}i$ introduit dans la loi (2) permet d'obtenir rapidement la convergence des vitesses angulaires satellite vers une vitesse constante autour de l'axe choisi (l'axe Zs pour une valeur appropriée de $\dot{B}i$).

La mise en spin s'effectue en parallèle dès la fin de réduction des vitesses. La vitesse angulaire atteinte correspond à la somme $\omega_i + 2w_o$ de la vitesse de consigne de rotation en axes satellite et de la rotation des lignes de champ magnétique le long de l'orbite.

- La loi (2) garantit l'alignement final de l'axe avec la normale au plan de l'orbite, sans risque de capture inverse : l'état convergé stable correspond à la situation où le satellite tourne à la plus grande vitesse angulaire possible ($2\omega_o+\omega_i$, et non $-2\omega_o+\omega_i$) autour de son axe de spin.

La progression d'attitude du satellite au cours de la première orbite peut être celle montrée en figure 3. Le satellite présente en général, lors de l'injection en 10a, une orientation et des vitesses de rotation (spin et nutation) mal définies. La mise en oeuvre de la loi (2) conduit à une réduction des vitesses de rotation parasites amenant à l'état 10b. Progressivement, le satellite est amené à tourner autour d'un axe de spin sélectionné, avec une pulsation de $2\omega_o$ (positions 10 c à 10 d) + $\omega i$.

Dans la situation finale, le soleil décrit, en phase jour, un cercle de 60° de rayon angulaire autour de l'axe de visée du capteur solaire 40 dans le cas d'une orbite 10 h ou 14h. Il suffira dans ce cas d'un seul capteur lors de la seconde étape. Si le rayon angulaire dépasse 80° (cas d'une orbite dont l'heure locale du noeud est comprise entre 11h20 et 14h40) le soleil n'est plus vu à coup sûr par ce capteur d'axe de visée orthogonal au plan des générateurs solaires. Il faut alors prévoir un capteur supplémentaire sur une face pour savoir dans quel sens le couple de redressement de l'axe de spin doit être appliqué.

Dans le cas fréquent où l'axe de spin n'est pas l'axe d'inertie maximale, le gain k de la loi (2) doit être suffisant pour que le système reste stable. Pour cela, la bande passante de contrôle doit être supérieure au pôle instable de la dynamique libre. Pour éviter une divergence de la nutation, pouvant aller jusqu'à la nutation à plat, une valeur élevée de k sera souvent nécessaire.

2. La seconde étape est constituée par le redressement de l'axe de spin. Elle est commandée par les signaux d'écart angulaire (dans deux directions, généralement orthogonale), entre la direction du soleil et Zs (normale au plan des générateurs solaires).

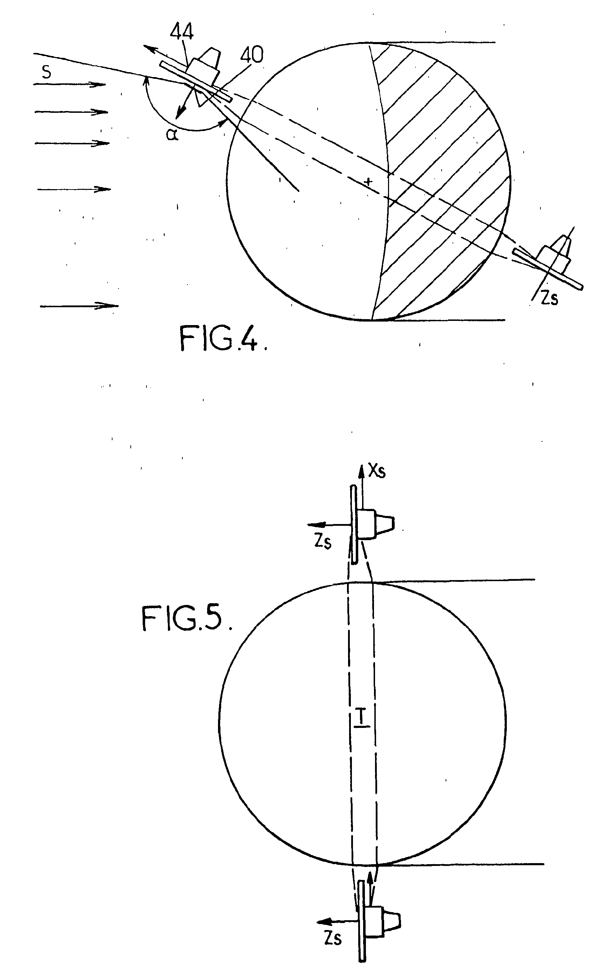

La figure 4 montre schématiquement le mode d'acquisition utilisant un capteur solaire 40 à grand champ $\alpha$, fournissant un signal d'écart par rapport à la direction S du soleil dans deux directions, aussi longtemps que le satellite n'est pas dans l'ombre de la terre. Un second capteur, sur une face latérale 44 permet d'obtenir un signal même lorsque le soleil sort du champ, pour des orbites entre 11h20 et 14h40.

Pour réorienter l'axe de spin, on génère par action des magnéto-coupleurs un couple perpendiculaire à l'axe de spin Zs (afin de ne pas perturber le module du moment cinétique) et vers le soleil. Par ailleurs, il n'est possible de fournir du couple que dans le plan normal à la direction du champ magnétique local. On commande donc un couple qui est à la fois dans le plan normal du champ magnétique B et normal à H.

On choisit par ailleurs le sens d'actionnement qui rapproche l'axe de spin de la direction du soleil, et une amplitude qui est en fonction croissante de l'écart entre l'axe de spin et la direction du soleil et du sol (par exemple proportionnelle) :

$$C_i = K \left( u_{sol}, n_B \right) n_B \qquad (4)$$

où $K$ est un gain, $u_{sol}$ est la direction du soleil en axes du satellite, et $n_B$ est un vecteur directeur de l'intersection entre le plan normal à H, c'est à dire le plan $(x_{sat}, y_{sat})$, où $y_{sat}$ est suivant la normale orbitale en pointage géocentrique et le plan normal à B.

Dans tous les cas, le redressement sera progressif pour les valeurs habituelles des vitesses de spin et des inerties, le redressement s'effectue généralement en une seule orbite.

Les couples servant au redressement de l'axe de spin ont tendance à exciter la nutation. La loi (2) assure l'amortissement de cette nutation, en phase jour comme en éclipse, avec une meilleure performance en éclipse, puisque l'excitation cesse alors.

3. Plutôt que d'attendre que l'étape de réduction des vitesses et d'alignement de l'axe de spin avec la normale orbitale ait convergé (en 2 à 3 orbites typiquement) avant de déclencher la loi de redressement de l'axe de spin, il est possible de faire travailler ces deux lois en parallèle : si le soleil est visible dans le champ du capteur solaire avant la convergence de la phase de "Bspin" seul, le redressement de l'axe commence déjà. Ainsi, la durée complète de l'acquisition est souvent égale à la durée de réduction des vitesses.

Ainsi, la séquence complète s'effectue de façon naturelle, sans logique de transition.

4. Il est également possible de déclencher la loi de redressement de l'axe de spin en même temps que l'étape de réduction des vitesses et d'alignement de l'axe de spin avec la normale à l'orbite.

Modes d'acquisition et de survie

Le mode proposé ne différencie pas l'acquisition et la survie.

La loi (2) est applicable pour amener et maintenir le satellite en mode survie, quel qu'il soit.

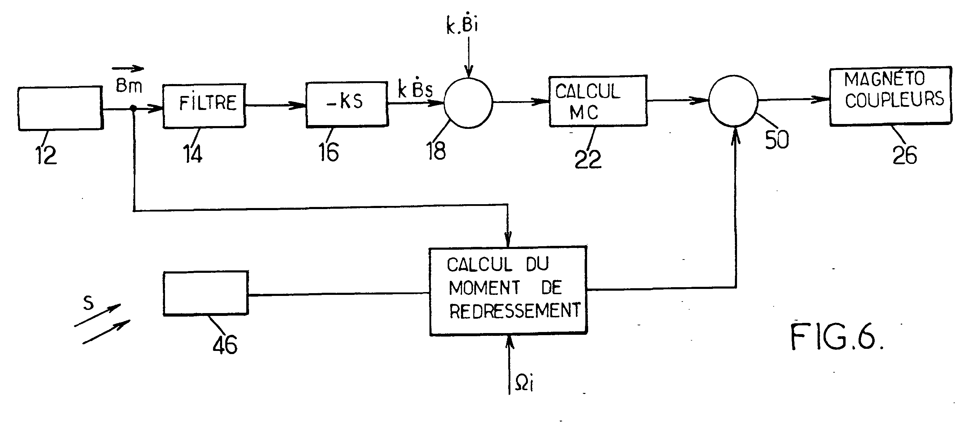

Dans le cas, montré en figure 5, de la survie sur une orbite polaire héliosynchrone proche de 6h-18h, cette loi appliquée à l'axe normal aux générateurs solaires assure la réduction des vitesses, la convergence de la dynamique, l'acquisition solaire et l'état stable de survie sans moment cinétique interne et sans capteur solaire. Le réglage de la vitesse de spin souhaitée (2ω$_o$+ω$_i$) en tangage (autour de l'axe Zs) permet d'optimiser la performance suivant les perturbateurs extérieurs.

Ce mode de survie est particulièrement robuste et n'utilise strictement que des capteurs et actionneurs magnétiques et une loi de contrôle extrêmement simple, sans logique de seuil ni de transition. Les panneaux solaires sont dans une configuration "moulin à vent", c'est-à-dire sensiblement dans le plan de l'orbite.

Dans le cas d'une orbite polaire héliosynchrone proche de 12h-24h (cas montré sur la figure 3) ou d'orbites équatoriales, on ne peut pas aligner l'axe de spin vers le soleil. En effet, l'axe de spin s'aligne naturellement avec la normale orbitale par application de la loi (2), tandis que le soleil est plutôt dans le plan de l'orbite. On choisit alors comme axe de spin un des deux axes du plan des générateurs solaires. L'état convergé correspond à une configuration dite "barbecue" où les générateurs sont périodiquement pointés vers le soleil (avec un angle d'incidence minimum correspondant à l'angle entre le plan de l'orbite et la direction du soleil).

Si toutefois le bilan de puissance n'est pas satisfaisant, et que l'on désire un état convergé semblable au mode "moulin à vent" d'une orbite 6h-18h, la loi (2) seule n'est pas suffisante et il est nécessaire de revenir à la loi de redressement mentionnée plus haut.

La figure 6 montre une constitution de principe possible d'une boucle de commande. Cette boucle comporte un magnétomètre 3 axes 12 fournissant des signaux de sortie qui sont filtrés en 14 pour éliminer les parasites et transitoires. Un organe de calcul 16 détermine la dérivée par rapport au temps de la mesure et la multiplie par un gain k. Pour obtenir des constantes de temps d'amortissement égales autour des trois axes, le gain k pour chaque axe est avantageusement normé par le moment d'inertie autour de l'axe considéré. Le terme k. $\dot{B}$i est soustrait en 18.

Le couple de commande à appliquer par les magnéto-coupleurs est calculé en 22.

Le couple de mise en spin est calculé par la formule (2). Il est égal au produit vectoriel du moment magnétique $\vec{M}$ des magnéto-coupleurs 26, par le champ magnétique réel $\vec{B}$. Si le couple requis correspond à un courant trop élevé pour que les magnéto-coupleurs aient une caractéristique linéaire, un organe de calcul supplémentaire peut être prévu pour tenir compte de la saturation en limitant le courant appliqué aux magnéto-coupleurs 26.

**Revendications**

1. Procédé de commande d'attitude et de stabilisation d'un satellite (34) en orbite terrestre basse avec une pulsation orbitale ωo, suivant lequel on mesure (12, 38) les composantes du vecteur champ magnétique terrestre ($\vec{B}_m$) suivant les trois axes de mesure d'un trièdre lié au satellite (34), on déduit desdites composantes l'orientation du champ magnétique terrestre ($\vec{B}_m$) mesuré dans le trièdre et la dérivée $\dot{B}m$ du vecteur dudit champ, et on commande des magnéto-coupleurs (26) portés par le satellite (34) à partir desdites orientation et dérivée du champ magnétique terrestre ($\vec{B}_m$) pour créer un couple de mise en rotation du satellite (34) à une pulsation (ωc) autour d'un axe de spin (Z$_s$) déterminé du satellite (34), **caractérisé en ce que** le procédé est mis en oeuvre sans faire appel à un moment cinétique interne au satellite (34), et l'axe de spin (Z$_s$) est un axe sélectionné du satellite (34), pouvant être différent de l'axe de plus grande inertie du satellite (34), et autour duquel le satellite (34) tourne avec ladite pulsation (ωc) qui est supérieure à 2 ωo.

2. Procédé selon la revendication 1, **caractérisé en ce qu'**on réalise un mode d'acquisition ou de mise en pointage solaire n'utilisant que la mesure (12, 38) du champ magnétique terrestre ($\vec{B}_m$), des magnéto-coupleurs (26) et au moins un capteur solaire (40).

3. Procédé selon la revendication 1 ou 2, **caractérisé en ce qu'**on commande les magnéto-coupleurs (26) de façon à appliquer au satellite (34) un moment magnétique Mc égal à :

$$\text{Mc} = -k \ (\dot{B}m - \dot{B}i)$$

Où k est un gain, Bm est un vecteur représentant le champs magnétique terrestre local, $\dot{B}i$ est un vecteur de consigne représentatif d'une vitesse angulaire de biais, tendant à amener l'axe de spin (Z$_s$) orthogonalement au plan de l'orbite (10).

**4.** Procédé selon la revendication 3, **caractérisé en ce que** la vitesse angulaire de biais représentée par ledit vecteur *Bi* est générée par application, à l'aide des magnéto-coupleurs (26), d'un moment

$$M_c = KB.(\dot{b}_m - \dot{b}_i) = KB.(\dot{b}_m - \Omega i \times \dot{b}_m).$$

où $\dot{b}$ i est la variation de la direction magnétique de consigne en repère satellite, b est un vecteur B normé et $\Omega$i est le vecteur vitesse angulaire souhaité de la direction magnétique bi en repère satellite.

**5.** Procédé selon la revendication 3, **caractérisé en ce que** la vitesse angulaire de biais représentée par ledit vecteur *Bi* est générée par l'application, à l'aide des magnéto-coupleurs (26), d'un moment qui est dans un plan normal au champ magnétique terrestre ($B_m$)

**6.** Procédé selon l'une quelconque des revendications 3 à 5, **caractérisé en ce que** l'on introduit, dans la loi de détermination du moment magnétique ($M_c$), un terme générant une composante de couple tendant à amener l'axe de spin ($Z_s$) dans une direction pré-déterminée par rapport à la direction du soleil (S).

**7.** Procédé selon la revendication 1, 2 ou 3, **caractérisé en ce que**, après ou pendant ladite mise en rotation du satellite (34) à vitesse ωc, on génère, par action des magnéto-coupleurs (26), un couple perpendiculaire à l'axe de spin ($Z_s$) pour écarter l'axe de spin ($Z_s$) de la normale au plan de l'orbite (10).

**8.** Procédé selon la revendication 6, **caractérisé en ce que** l'on contrôle l'orientation de l'axe de spin ($Z_s$) de façon à maintenir l'axe de spin ($Z_s$) orthogonal à des générateurs solaires (36) du satellite (34) et dirigé vers le soleil (S).

**9.** Procédé selon l'une quelconque des revendications 1 à 8 **caractérisé en ce que** lesdites composantes du vecteur champ magnétique terrestre $(\vec{B}_m)$ sont mesurées en utilisant au moins un magnétomètre trois axes (12, 38).

**Patentansprüche**

**1.** Verfahren zur Fluglagen- und Stabilisierungsregelung eines Satelliten (34) in niedriger Umlaufbahn mit einer orbitalen Winkelgeschwindigkeit ωo, bei dem die Komponenten des Erdmagnetfeld-Vektors $(\vec{B}_m)$ (12, 38) gemäß den drei Messachsen eines an den Satelliten (34) gebundenen Koordinatendreibeins gemessen werden, von den Komponenten auf die Orientierung des in dem Koordinatendreibeins gemessenen Erdmagnetfeldes $(\vec{B}_{.m})$ und die Ableitung $\dot{B}_m$ des Vektors des Feldes geschlossen wird und anhand der Orientierung und Ableitung des Erdmagnetfeldes $(\vec{B}_m)$ Magnetkoppler (26), die von dem Satelliten getragen werden, betätigt werden, um ein Moment zu bilden, das den Satelliten (34) mit einer Winkelgeschwindigkeit (ωc) um eine festgelegte Drehimpulsachse ($Z_s$) des Satelliten (34) in Drehung zu versetzen, **dadurch gekennzeichnet, dass** das Verfahren eingesetzt wird, ohne ein dem Satelliten (34) zugehöriges Impulsmoment heranzuziehen, und die Drehimpulsachse ($Z_s$) eine ausgewählte Achse des Satelliten (34) ist, die von der Achse der größten Trägheit des Satelliten (34) verschieden sein kann und um die sich der Satellit (34) mit der Winkelgeschwindigkeit (ωc) dreht, die größer als 2 ωo ist.

**2.** Verfahren nach Anspruch 1, **dadurch gekennzeichnet, dass** ein Modus zur Erfassung oder zur Ausrichtung auf die Sonne bewerkstelligt wird, indem nur die Messung (12, 38) des Erdmagnetfeldes $(\vec{B}_m)$, Magnetkoppler (26) und wenigstens ein Solar-Sensor (40) verwendet werden.

**3.** Verfahren nach Anspruch 1 oder 2, **dadurch gekennzeichnet, dass** die Magnetkoppler (26) so betätigt werden, dass an dem Satellit (34) ein magnetisches Moment $M_c$ angelegt wird, das gleich ist mit:

$$M_c = -k \ (\dot{B}_m - \dot{B}_i),$$

wo k eine Verstärkung ist, $B_m$ ein das lokale Erdmagnetfeld darstellender Vektor ist, $\dot{B}_i$ ein Größenvektor ist, welcher eine seitliche Winkelgeschwindigkeit darstellt, welche die Neigung hat, die Drehimpulsachse ($Z_s$) senkrecht zur Ebene der Umlaufbahn (10) zu führen.

4. Verfahren nach Anspruch 3, **dadurch gekennzeichnet, dass** die seitliche Winkelgeschwindigkeit, die durch den Vektor $\dot{B}_i$ dargestellt wird, mit Hilfe der Magnetkoppler (26) durch Anlegen eines Momentes

$$M_c = KB. \ (\dot{b}_m - \dot{b}_i) = KB. \ (\dot{b}_m - \Omega i \ X \dot{b}_m).$$

erzeugt wird, wo $\dot{b}_i$ die Variation der magnetischen Größen-Richtung im Bezugssystem Satellit ist, b ein Normvektor B ist und $\Omega i$ der Vektor der Soll-Winkelgeschwindigkeit der magnetischen Richtung bi im Bezugssystem Satellit ist.

5. Verfahren nach Anspruch 3, **dadurch gekennzeichnet, dass** die seitliche Winkelgeschwindigkeit, die durch den Vektor $\dot{B}_i$ dargestellt wird, mit Hilfe der Magnetkoppler (26) durch Anlegen eines Momentes erzeugt wird, das in einer Ebene senkrecht zum Erdmagnetfeld ($B_m$) liegt.

6. Verfahren nach einem der Ansprüche 3 bis 5, **dadurch gekennzeichnet, dass** in das Gesetz zur Bestimmung des magnetischen Momentes ($M_c$) ein Glied eingeführt wird, das eine Drehmoment-Komponente erzeugt, welche die Neigung hat, die Drehimpulsachse ($Z_s$) in eine vorbestimmte Richtung in Bezug auf die Richtung der Sonne (S) zu führen.

7. Verfahren nach Anspruch 1, 2 oder 3, **dadurch gekennzeichnet, dass** nach dem oder während des in Drehung Versetzen des Satelliten (34) mit der Geschwindigkeit ωc durch die Einwirkung der Magnetkoppler (26) ein Drehmoment senkrecht zur Drehimpulsachse ($Z_s$) erzeugt wird, um die Drehimpulsachse ($Z_s$) von der Senkrechten zur Ebene der Umlaufbahn (10) zu entfernen.

8. Verfahren nach Anspruch 6, **dadurch gekennzeichnet, dass** die Ausrichtung der Drehimpulsachse ($Z_s$) so überwacht wird, dass die Drehimpulsachse ($Z_s$) senkrecht zu den Solargeneratoren (36) des Satelliten (34) gehalten wird und zur Sonne hin gerichtet ist (S).

9. Verfahren nach einem der Ansprüche 1 bis 8, **dadurch gekennzeichnet, dass** die Komponenten des Erdmagnetfeld-Vektors $(\vec{B}_m)$ gemessen werden, indem wenigstens ein Drei-Achsen-Magnetometer (12, 38) verwendet wird.

**Claims**

1. A method of controlling the attitude and stabilization of a satellite (34) placed on a low earth orbit with an orbital angular frequency $\omega_0$ according to which the components of the vector of the earth's magnetic field $(\vec{Bm})$ are measured (12, 38) along the three measurement axes of a frame of reference bound with the satellite (34), the orientation of the earth's magnetic field $(\vec{Bm})$ measured in the frame of reference and the derivative $\dot{Bm}$ of the vector of said field are deduced from said components, and magneto-couplers (26) carried by the satellite (34) are controlled from said orientation and derivative of the earth's magnetic field $(\vec{Bm})$ to create a torque for setting the satellite (34) into rotation at an angular frequency (ωc) about a determined spin axis (Zs) of the satellite (34), **characterized in that** the method is implemented without using any internal angular momentum of the satellite (34), and the spin axis (Zs) is a selected axis of the satellite (34) which can be different from the axis of greatest inertia of the satellite (34), and about which the satellite (34) rotates with said angular frequency ($\omega$c) which is greater than $2\omega_0$.

2. A method according to claim 1, **characterized in that** it includes a step of acquisition or of solar pointing with exclusive use of measurement (12, 38) of the earth magnetic field ($\vec{Bm}$), said magneto-couplers (26) and at least one solar sensor (40).

3. A method according to claim 1 or 2, **characterized in that** said magneto-couplers (26) are controlled for applying a magnetic torque to the satellite (34) which is Mc = -k($\dot{Bm}$-$\dot{Bi}$), where:

   k is a gain,
   Bm is a vector representing the local earth's magnetic field,
   $\dot{Bi}$ is a reference vector which represents a bias angular velocity tending to bias the spin axis (Zs) to a direction orthogonal to a plane of the orbit (10).

4. A method according to claim 3, **characterized in that** the bias angular velocity represented by said vector $\dot{Bi}$ is obtained by causing the magneto-couplers (26) to apply a moment

$$Mc = KB. \ (\dot{b}_m - \dot{b}_i) = KB. \ (\dot{b}_m - \Omega i \ x \ \dot{b}_m)$$

where $\dot{b}_i$ is a variation of the set magnetic direction in the frame of reference of the satellite, b is a unit vector B, and $\Omega$i is the desired angular velocity vector in the satellite frame of reference..

5. A method according to claim 3, **characterized in that** the bias angular velocity represented by said vector $\dot{Bi}$ is obtained by causing the magneto couplers (26) to apply a moment which is in a plane orthogonal to the earth's magnetic field (Bm).

6. A method according to any of claims 3-5, **characterized in that** it comprises the step of adding, in the law determining the magnetic moment Mc, a term generating a torque component tending to bias the spin axis (Zs) to a predetermined direction with respect to the direction toward the sun (S).

7. A method according to claim 1, 2 or 3, **characterized in that** a torque orthogonal to the spin axis (Zs) is generated with the magneto-couplers (26) for forcing the spin axis (Zs) away from a direction orthogonal to the plane of the orbit (10), during or after said setting the satellite into rotation.

8. A method according to claim 6, **characterized in that** the orientation of the spin axis (Zs) is controlled to be maintained orthogonal to solar generators (36) of the satellite (34) and toward the sun (S).

9. A method according to any of claims 1 to 8, **characterized in that** said components of the earth's magnetic field vector ($\vec{Bm}$) are measured using at least a 3-axes magnetometer (12, 38).

FIG.1.

FIG.2.

FIG.3.

RÉDUCTION

ÉTAT CONVERGÉ
BSPIN

FIG.4.

FIG.5.

FIG.6.